# EUROPÄISCHE PATENTANMELDUNG

(11) **EP 1 724 377 A1**
(43) Veröffentlichungstag der Anmeldung: **22.11.2006**
(21) Anmeldenummer: 06014995.2
(22) Anmeldetag: 28.07.1999
(51) Int. Cl.: C25D 17/06, C25D 17/00, C25D 17/28, C25D 19/00, B65G 49/04

(54) **Vorrichtung zum elektrolytischen Beschichten von Behandlungsgut und Horden für diese Vorrichtung**

(30) Priorität: 29.07.1998 DE 19834245
(62) Teilanmeldung aus: 99941474.1
(71) Anmelder: Walter Hillebrand GmbH & Co. Galvanotechnik, 58739 Wickede/Ruhr (DE); Nütro Maschinen- und Anlagenbau GmbH & Co. KG, 91275 Auerbach (DE)
(72) Erfinder: Die Erfindernennung liegt noch nicht vor
(74) Vertreter: König, Reimar

(57) **Zusammenfassung**

Bei einem Verfahren zum Mehrfachbeschichten, werden Horden für das Behandlungsgut in einem separaten Kreislauf durch einen Behälter zum galvanischen Tauchbeschichten geführt. Hinter dem Behälter findet ein Hordenwechsel statt und das Behandlungsgut wird auf einer Wechselhorde in einem weiteren separaten Kreislauf durch einen Behälter zum elektrophoretischen Beschichten geführt.

## Beschreibung

Die Erfindung bezieht sich auf ein Verfahren und eine Anlage zum Mehrfachbeschichten, bei denen das Behandlungsgut durch Bäder geführt und dort chemisch, galvanisch und/oder elektrophoretisch behandelt wird.

Verfahren und Vorrichtungen dieser Art dienen dazu, Gegenstände, die zumindest teilweise aus einem leitfähigen Werkstoff bestehen, mit einer Oberfläche zu versehen, deren technischen oder optischen Eigenschaften auf den speziellen Verwendungszweck abgestellt sind. Dies kann durch chemische oder elektrochemische Behandlung der Oberfläche, beispielsweise Chromatieren der Oberfläche eines metallischen Werkstücks sowie durch elektrolytisches oder elektrophoretisches Aufbringen einer Deckschicht geschehen.

Die bekannten Naßverfahren sind sehr aufwendig, weil das Behandlungsgut durch eine Reihe von hintereinander angeordneten Behältern mit den verschiedensten Behandlungsflüssigkeiten, beispielsweise Reinigungsmittel, Elektrolyte und Elektrotauchlacke geführt werden muß. Dies geschieht in Durchlaufanlagen mit Förderern, die das Behandlungsgut von Tauchbecken zu Tauchbecken durch eine Behandlungslinie bewegen.

Weil großstückiges Behandlungsgut einzeln und Kleinteile im Hinblick auf eine homogene Oberfläche nur mit begrenzter Schütthöhe durch die einzelnen Bäder geführt werden können, sind herkömmliche Anlagen außerordentlich aufwendig und besitzen einen verhältnismäßig geringen Durchsatz.

Ein besonderes Problem besteht darin, eine in allen Teilen gleichmäßige Oberflächenbehandlung, beispielsweise ein vollflächiges Galvanisieren und/oder Lackieren ohne Fehlstellen zu erreichen. Derartige Fehlstellen ergeben sich insbesondere an den Berührungspunkten zwischen dem Behandlungsgut und den Fördermitteln für den Transport des Behandlungsgutes durch die einzelnen Bäder.

Der Erfindung liegt das Problem zugrunde, die Wirtschaftlichkeit der bekannten Verfahren und Vorrichtungen zum Mehrfachbeschichten ohne Beeinträchtigung der Oberflächenqualität des Behandlungsguts zu verbessern.

Die Lösung dieses Problems besteht in einem Verfahren, bei dem Horden mit dem Behandlungsgut auf einer Kreisbahn mit Hilfe mehrerer Förderer von Behandlungsstation zu Behandlungsstation und durch die einzelnen Badbehälter zum galvanischen oder elektrophoretischen Beschichten sowie durch etwaige Vor- und Nachbehandlungsbehälter geführt werden. Dies geschieht in zwei getrennten Kreisläufen, die das Behandlungsgut nacheinander durchläuft, während die Horden jeweils nur einen Kreislauf durchlaufen. Dies macht beim Überwechseln des Behandlungsguts aus dem einen Kreislauf in den anderen Kreislauf einen Hordenwechsel erforderlich.

Das Behandlungsgut wird zunächst auf einer Galvano-Horde vorbehandelt und sodann galvanisch mit einer Zwischenschicht beispielsweise aus einer Zink-Nickel-Legierung versehen, sodann nachbehandelt, beispielsweise chromatiert, konversionsbeschichtet oder passiviert. Danach verläßt es den ersten Kreislauf und wechselt über auf eine andere Horde bzw. in den zweiten Kreislauf, in dem elektrophoretisch eine Deckschicht aufgebracht und das Behandlungsgut nach dem Beschichten üblicherweise getrocknet wird. Nach dem Trocknen können die Lackierhorden entladen, gereinigt und sodann erneut mit dem Behandlungsgut aus dem ersten Kreislauf beschickt werden.

Vorzugsweise werden die Horden beim Beschichten horizontal zwischen oberen und unteren Anoden oder Kathoden hindurchbewegt; dies kann kontinuierlich geschehen. Vorzugsweise werden die Galvano- und die Lackierhorden jedoch schrittweise zumindest durch die einzelnen Badbehälter geführt.

Das erfindungsgemäße Verfahren läßt sich mit besonderem Vorteil in einer Anlage durchführen, die aus mehreren Hordenförderern besteht. Diese Förderer sind in zwei Gruppen jeweils so angeordnet, daß sie einen geschlossenen Kreislauf für die Horden bilden. Dabei sind die beiden Kreisläufe über einen Hordenwechsler miteinander verbunden, in dem das Behandlungsgut aus dem Galvanokreislauf in den Lackierkreislauf gelangt bzw. von einer Galvano-horde auf eine Lackierhorde umgesetzt wird, die das Behandlungsgut durch einen Badbehälter, einen Trockner gegebenenfalls mit einer Kühlzone und vorzugsweise durch eine Entlade- und/oder eine Reinigungsstation führt.

Die Hordenförderer in den Badbehältern bestehen vorzugsweise im Kern aus einem Hubund Fahrrahmen, der die Horden schrittweise durch die Behälter bewegt. Der dafür erforderliche Antrieb kann aus einem Schub- und einem Hubzylinder bestehen, der mit einem Finger in ein Langloch des Hub- Fahrrahmens eingreift. Auf diese Weise ist es möglich, mehrere, jeweils auf einer Unterlage, beispielsweise Tragschienen, abgesetzte Horden gleichzeitig aufzunehmen, ein Stück vorwärts zu bewegen und wieder abzusetzen.

Vorzugsweise besitzen die Horden seitliche Tragarme, über die sie sich auf Tragschienen abstützen, die gleichzeitig die Stromversorgung der Horden und damit des Behandlungsguts übernehmen. An diesen Tragarmen können mit dem Hub- und Fahrrahmen verbundene Greifer angreifen, mit deren Hilfe die Horden auf den Tragschienen von einem Stellplatz zum nächsten Stellplatz bewegt, beispielsweise verschoben werden. Um eine möglichst gleichmäßige und in sich geschlossene Beschichtung zu gewährleisten, bewegen sich die Horden beim galvanischen und/oder elektrophoretischen Beschichten vorzugsweise zwischen oberhalb und unterhalb von ihnen angeordneten Anoden oder Kathoden hindurch.

Um das Entstehen von Lichtbögen und dadurch verursachten Verbrennungen beim Kontaktieren zu vermeiden, kann die Anlage mit zwei Gruppen von Kontakten ausgestattet sein, die jeweils abwechselnd geschlossen werden und auf diese Weise eine ununterbrochene Stromversorgung der Horden gewährleisten. Um das zu ermöglichen, kann der Behälter mit zwei Gruppen von Kontakten ausgestattet sein. Die eine Gruppe ist mit dem Hub- und Fahrrahmen fest verbunden und bewegt sich daher mit dem Rahmen von Stellplatz zu Stellplatz, während die andere Gruppe von beweglichen Kontakten stationär, beispielsweise behälterfest angeordnet ist.

Zum Galvanisieren eignet sich besonders eine Horde aus einem Rahmen mit Querleisten und einem elektrisch leitenden Kopfdraht mit einem freiliegenden Kontaktstreifen, auf dem das Behandlungsgut ruht. Die Horde kann insgesamt aus einem elektrisch leitenden Material bestehen; sie besitzt dann mit Ausnahme des Kontaktstreifens eine elektrisch isolierende Beschichtung.

Andererseits können die Horden jedoch auch eine sägezahnartige Tragkante für das Behandlungsgut aufweisen. Eine derartige Horde ist in der deutschen Patentschrift 41 42 997 beschrieben, deren Inhalt als Bestandteil dieser Beschreibung gilt.

Der Palettenwechsler besitzt vorzugsweise längs einer Brücke verfahrbare, vorzugsweise in einem Schlitten angeordnete Traglineale oberhalb eines Hubtischs bzw. eines Hordenförderers.

Der Förderer kann auch einen Hub- und Fahrrahmen besitzen, an dem jeweils ein Arm mehrerer zweiarmiger Winkelhebel angreifen, deren andere Arme über ein Gestänge miteinander verbunden sind. Dabei können der Hub- und Fahrrahmen sowie einer der Winkelhebel jeweils mit einem eigenen Antrieb, beispielsweise mit je einem Hydraulikzylinder verbunden sein. Mit dem Hub- und Fahrrahmen verbundene Greifarme für die Horden und im Behälter angeordnete Tragschienen für die Horden können mit Kontaktstiften zum Aufnehmen der Horden versehen sein, so daß die Horden entweder über die Greifarm- oder die Tragschienenstifte stets unter Strom stehen.

Zum Einbringen und Herausnehmen der Horden sind die Badbehälter bzw. deren Hub- und Fahrrahmen vorzugsweise mit einem Hordenmanipulator ausgestattet, der mit einem verfahrbaren Kipptisch und einem Niederhalter für das Behandlungsgut ausgestattet sein kann.

Schließlich kann der Lackierförderer auch durch eine Entladestation mit zwischen die Tragelemente bzw. Querleiste der Horden einfahrbaren Traglinearen und einem längs der Traglineare verfahrbaren Rechen ausgestattete Entladestation und/oder eine Reinigungsstation mit angetriebenen Reinigungsspachteln oder verfahrbaren Reinigungsköpfen verlaufen.

Die Erfindung wird nachfolgend anhand von in der Zeichnung dargestellten Ausführungsbeispielen des näheren erläutert. In der Zeichnung zeigen:

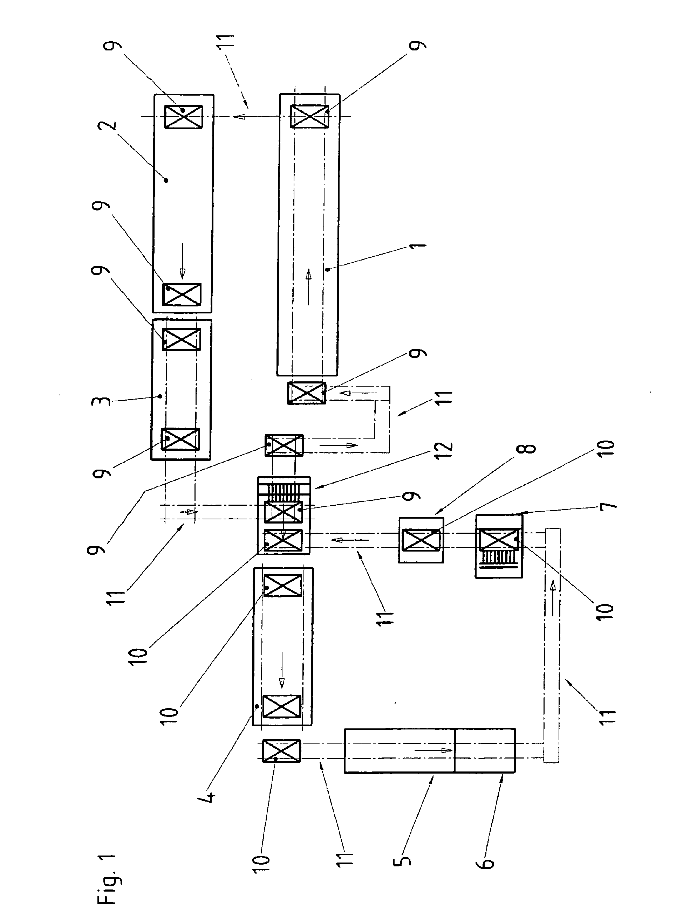

- Fig. 1:: eine Draufsicht auf eine Anlage zum Aufbringen einer Zwischen- und einer Deckschicht auf das Behandlungsgut,
- Fig. 2:: die Seitenansicht eines Hub- und Fahrrahmens in einem Badbehälter,

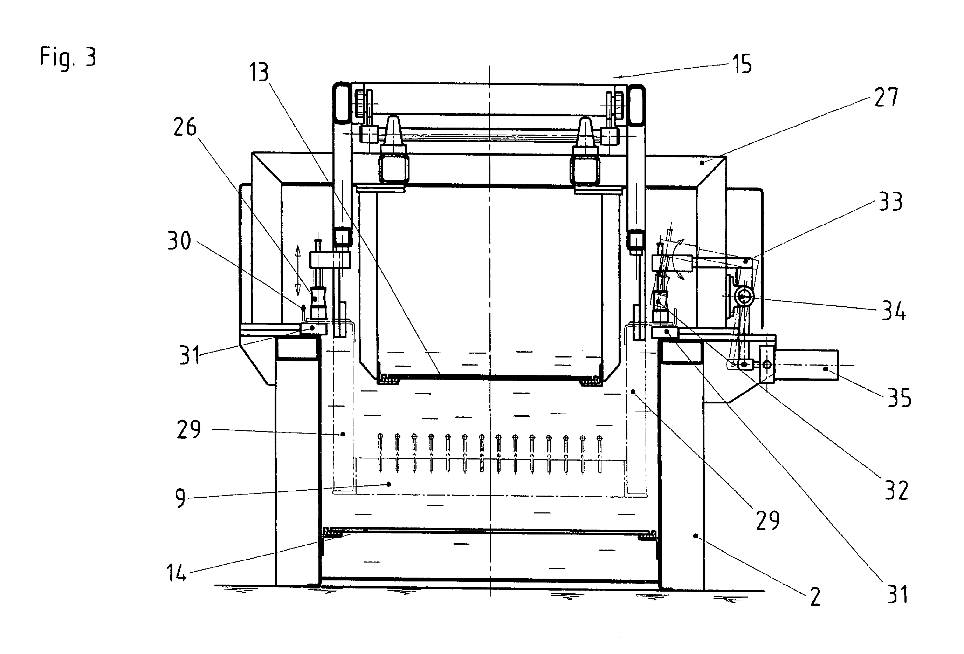

- Fig. 3:: einen Querschnitt durch den Badbehälter der Fig. 2 nach der Linie III-III,

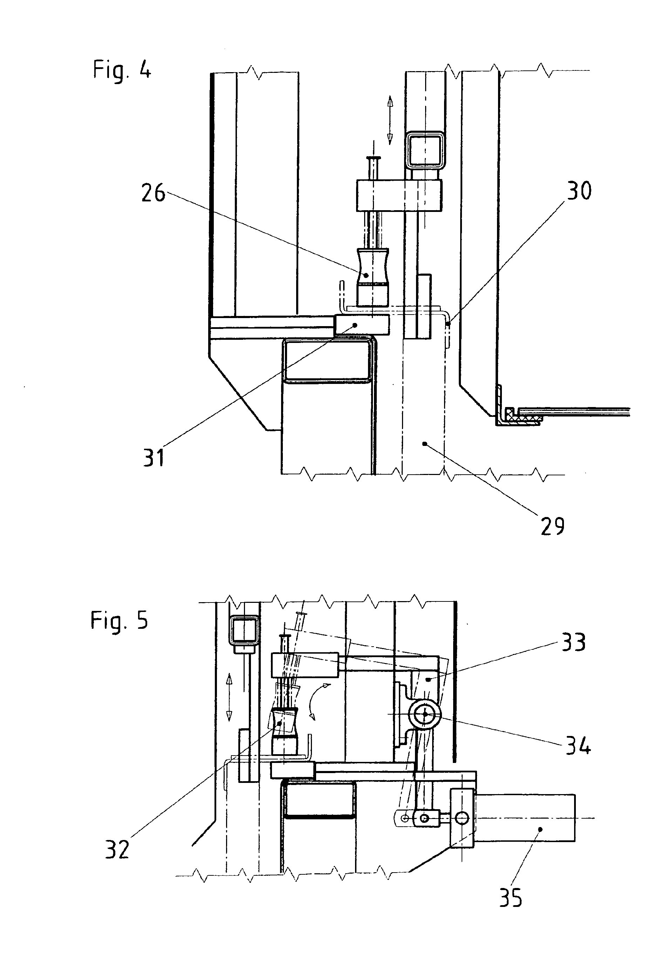

- Fig. 4:: eine vergrößerte Darstellung eines Teils des Hub- und Fahrrahmens mit einem rahmenfesten Kontakt,
- Fig. 5:: eine vergrößerte Darstellung eines Teils des Badbehälters mit einem behälterfesten Kontakt,
- Fig. 6:: einen Vertikalschnitt durch eine Horde,
- Fig. 7:: einen Schnitt durch die Horde der Fig. 6 nach der Linie VII-VII,
- Fig. 8:: die vergrößerte Darstellung eines Teils der Horde nach den Fig. 6 und 7,
- Fig. 9:: die schematische Darstellung eines Badbehälters zum elektrophoretischen Aufbringen einer Deckschicht,

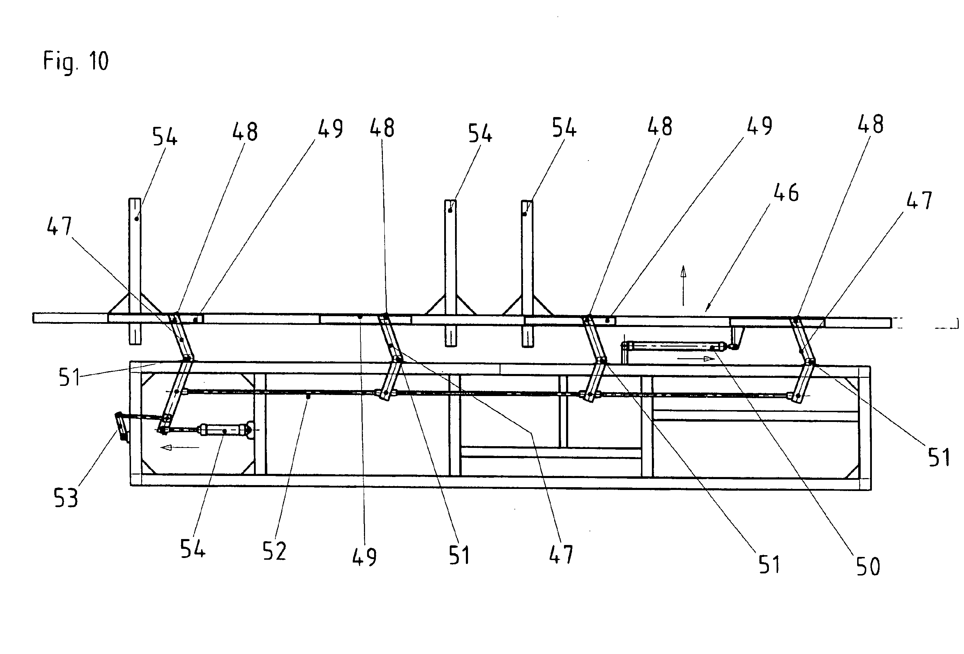

- Fig. 10:: eine Vergrößerung des in dem Badbehälter der Fig. 9 angeordneten Hub- und Fahrrahmens,
- Fig. 11:: einen Schnitt nach der Linie XI-XI in Fig. 10,

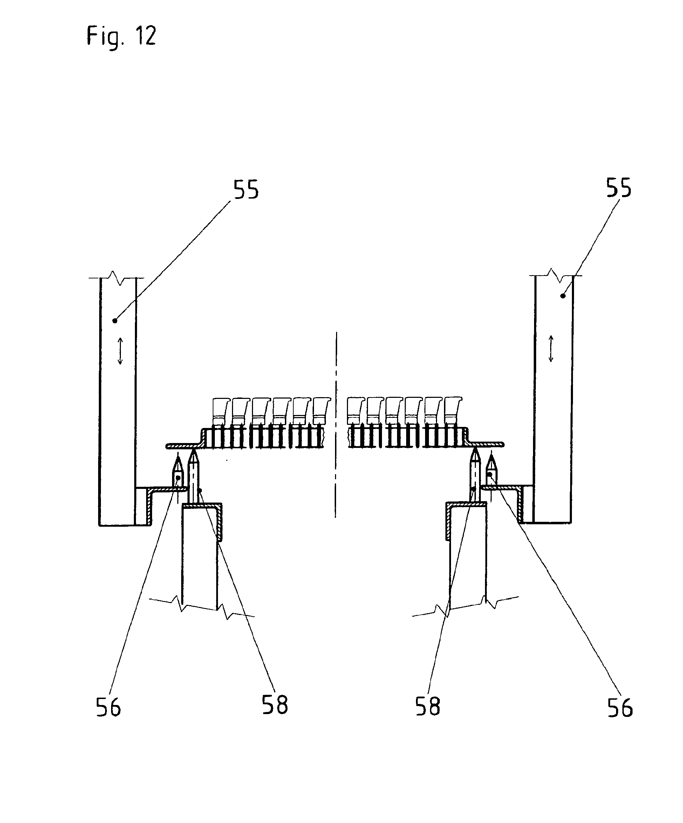

- Fig. 12:: eine vergrößerte Darstellung der Hordenabstützung im Badbehälter,
- Fig. 13:: eine Horde mit darunter befindlichem Hubtisch,
- Fig. 14:: die Horde der Fig. 13 mit hochgefahrenem Hubtisch,

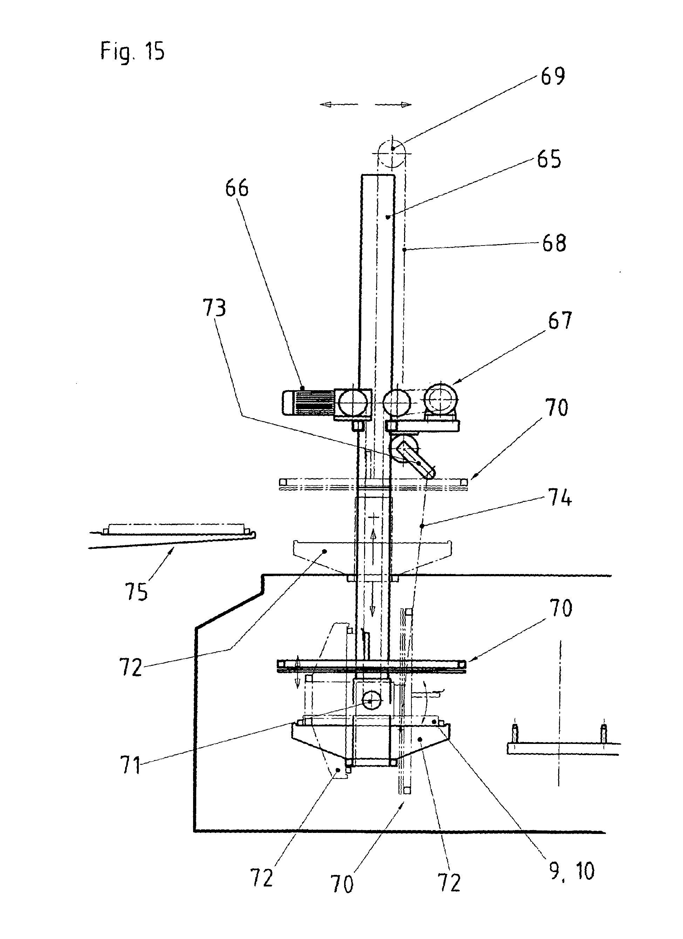

- Fig. 15:: einen Manipulator zum Einbringen und Entnehmen der Horden,

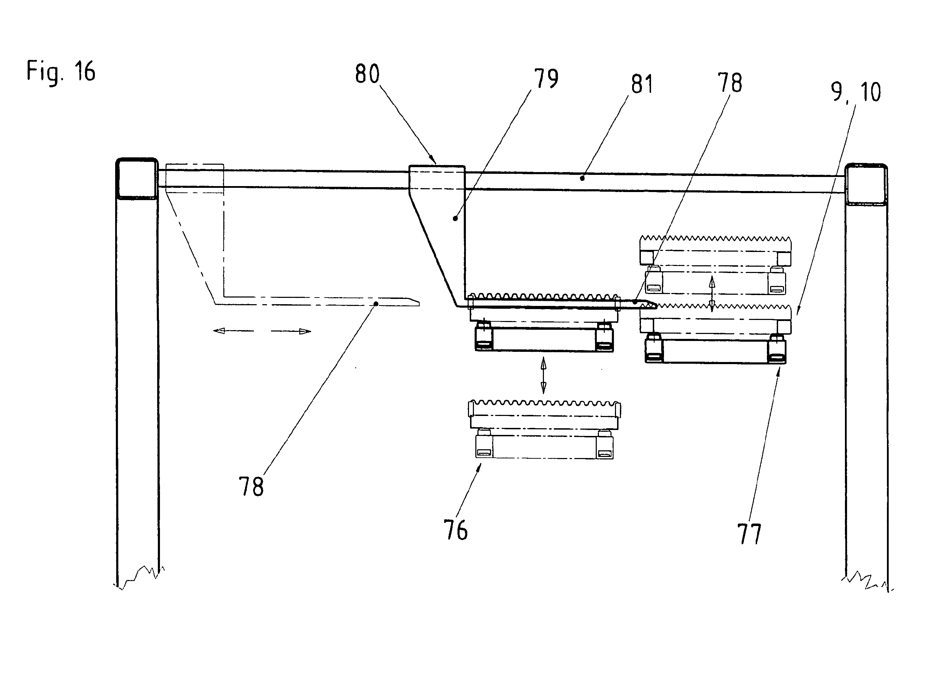

- Fig. 16:: einen Hordenwechsler in schematischer Darstellung,
- Fig. 17:: eine Entladestation in schematischer Darstellung,

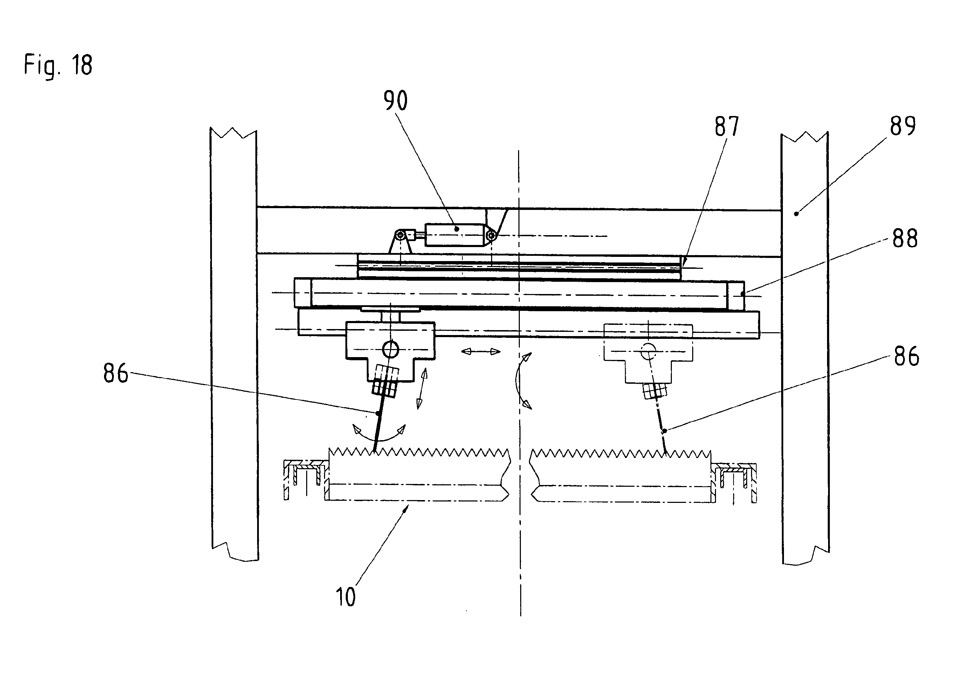

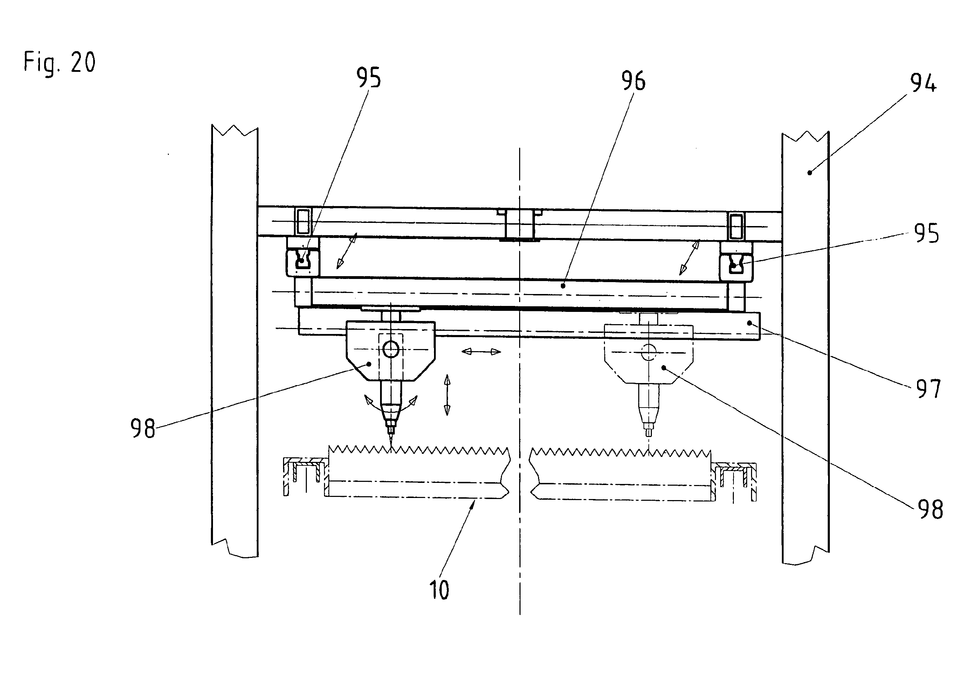

- Fig. 18 bis 20:: schematische Darstellungen verschiedener Reinigungsstationen.

Die Anlage besteht aus zwei Kreisläufen, und zwar einem galvanischen Kreislauf mit einem Badbehälter 1 zum Vorbehandeln, einem Badbehälter 2 zum galvanischen Beschichten und einem Badbehälter 3 zum Nachbehandeln des Behandlungsguts, das auf Horden durch die Badbehälter 1,2,3 bewegt wird. Der andere Kreislauf besteht aus einem Badbehälter 4 zum elektrophoretischen Beschichten und einem Trockner 5 mit einer Kühlzone 6, einer Entladestation 7 und einer Reinigungsstation 8.

Das Behandlungsgut wird auf Horden 9 einerseits und 10 andererseits durch die beiden Kreisläufe bewegt; dies geschieht mit Hilfe von Hordenförderern 11, welche die einzelnen Stationen 1.2.3 bzw. 4,5,6,7,8 der Anlage miteinander verbinden. Dabei kann es sich um übliche Ketten-, Riemen- oder Plattenförderer handeln, während in den Badbehältern spezielle Hordenförderer angeordnet sind.

Die beiden Kreisläufe sind über einen Hordenwechsler 12 miteinander verbunden, der das Behandlungsgut von den Paletten 9 des galvanischen Kreislaufs auf die Paletten 10 des Lackierkreislaufs umsetzt.

In dem Behälter 2 befinden sich eine obere Anode 13 und eine untere Anode 14, zwischen denen die Horden 9 hindurchgeführt werden. Dies geschieht mit Hilfe eines Hub- und Fahrrahmens 15, an dem ein behälterfester liegender Schubzylinder 16 direkt und ein ebenfalls behälterfester Hubzylinder 17 über einen behälterfesten Schwenkhebel mittelbar angreift. Der Schwenkhebel 18 ist über eine Schubstange 19 mit einem weiteren behälterfesten Schwenkhebel 20 gelenkig verbunden. Beide Schwenkhebel 18,20 greifen jeweils mit einem Finger 21,22 in einen Längsschlitz 23,24 des Hub- und Fahrrahmens 15 ein. Der Rahmen 15 ist mit paarweise angeordneten Greifarmen 25 sowie jeweils einem zwischen den Greifarmen befindlichen, vertikal beweglichen, abgefederten Kontaktstücken 26 versehen.

Die oberen Anoden 13 werden über eine Brückenkonstruktion 27 mit Strom versorgt, während die unteren Anoden 14 eine nicht dargestellte Stromversorgung besitzen.

Die Horden 9 besitzen vertikale Tragarme 29 mit S-förmigen Haltestücken 30 aus Kupfer, über die sie sich auf Tragschienen 31 des Behälters hängend abstützen. Die Tragarme 29 dienen als Stromzuführung und befinden sich in Berührung entweder mit den vertikal beweglichen Kontaktstücken 26 auf der einen Seite des Badbehälters 2 oder verschwenkbaren Kontaktstücken 32 auf der anderen Seite des Badbehälters. Die verschwenkbaren Kontaktstücke 32 befinden sich am Ende eines etwa U-förmigen Winkelhebels 33, der bei 34 schwenkbar gelagert ist und von einem Schwenkzylinder 35 betätigt werden.

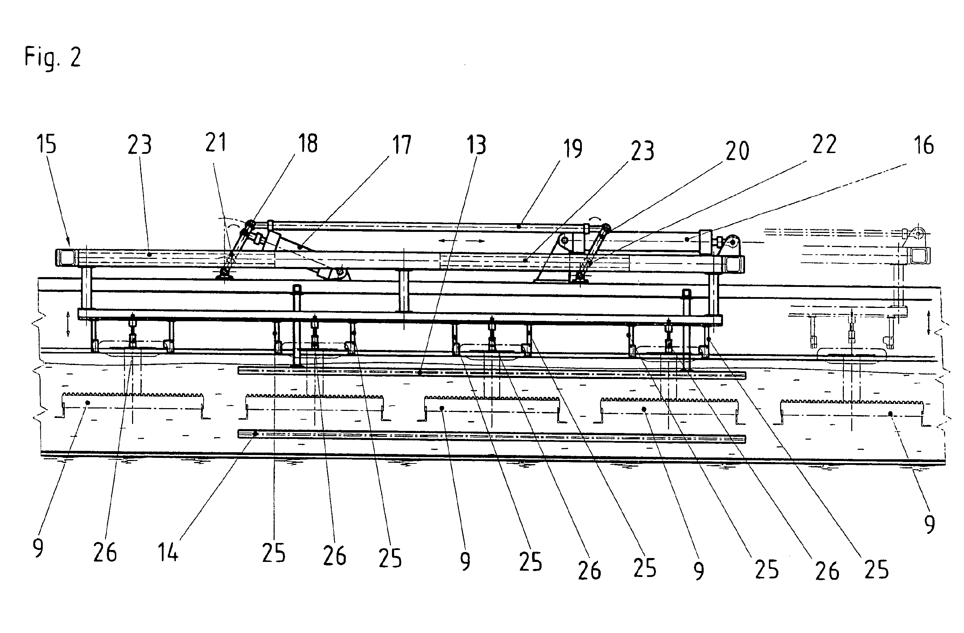

Die Greifarme 25 erfassen in ihrer abgesenkten Stellung die Kontaktstücke 30 der Haltearme 29 und verschieben diese im Verlaufe des Schubzylinderhubes auf den Stromschienen 31 von einem Stellplatz zum anderen Stellplatz. Ist ein Stellplatz erreicht, dann werden die Schwenkzylinder 35 betätigt und kommen die Kontaktstücke 32 mit den ihnen gegenüberliegenden Kontaktstücken 30 der Haltearme 29 in Berührung. Sobald dies geschehen ist, wird die Kolbenstange des Schubzylinders 16 ausgefahren und gleichzeitig der Hubzylinder 17 betätigt, so daß die Greifarme 15 von den Kontaktstücken 30 der Haltearme 29 freikommen. Gleichzeitig kommen die Kontaktstücke 26 außer Berührung mit den ihnen gegenüberliegenden Kontaktstücken 30 der Haltearme 29. Dies führt jedoch nicht zu einer Unterbrechung der Stromzufuhr zu den Horden, weil die stationären Kontaktstücke 32 während der Bewegung des Hub- und Fahrrahmens nach rechts in Fig. 2 in Berührung mit den ihnen gegenüberliegenden Kontaktstücken 30 der Haltearme 29 stehen.

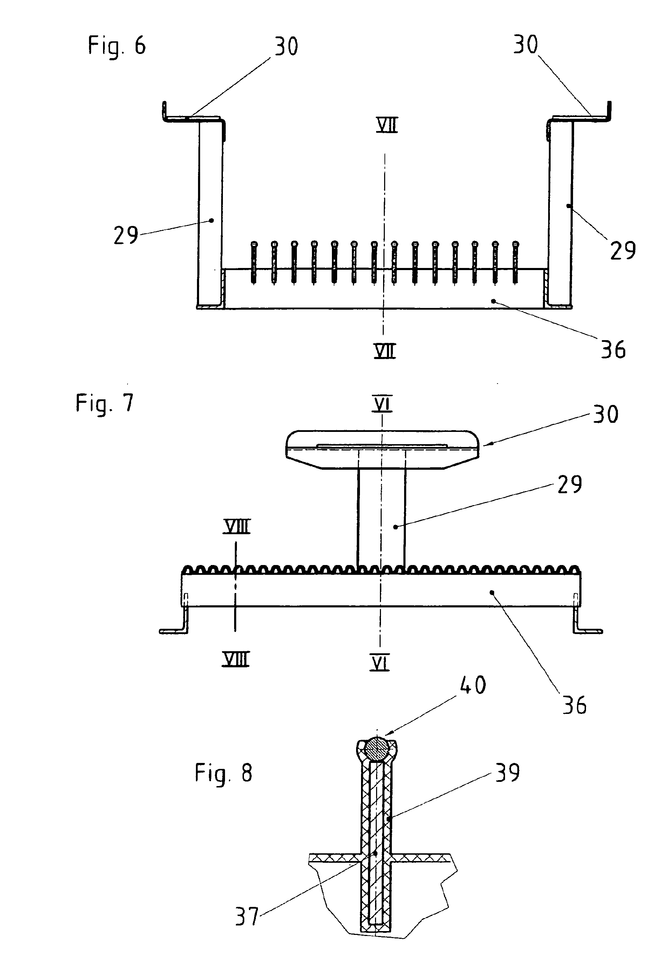

Die in den Fig. 6 bis 8 dargestellte Horde 9 besteht aus einem Rahmen 36, von dem aus sich nach oben die Haltearme 29 mit den Kontaktstücken 30 erstrecken. In dem Rahmen sind Querleisten 37 angeordnet, deren nach oben weisenden freien Enden mit einem Kontaktdraht 38 versehen sind. Der Rahmen 36 und die Querleisten sowie der Kontaktdraht besitzen ebenso wie die Haltearme 29 eine elektrisch isolierende Gummierung 39, die jedoch an dem Draht 38 einen Kontaktstreifen 40 freiläßt. Das Behandlungsgut ruht auf den Kontaktdrähten 38 und wird so über die Kontaktstreifen 40 mit Strom versorgt.

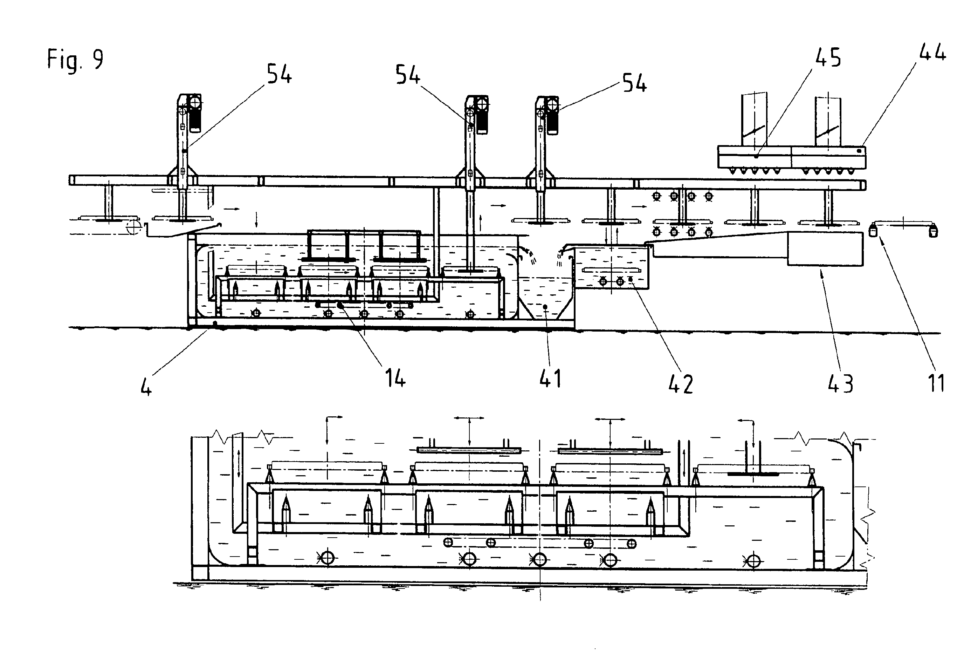

Zu dem in Fig. 9 dargestellten Behälter 4 zum elektrophoretischen Aufbringen einer Deckschicht gehören ein Überlaufbehälter 41, ein Sammelbehälter 42 und eine zu dem Sammelbehälter 2 hinführende Ablaufschräge 43, oberhalb derer zwei mit Düsen ausgestattete Gebläse 44,45 angeordnet sind.

In dem Behälter 4 befindet sich ein Hordenförderer mit einem Hub- und Fahrrahmen 46. Dieser Rahmen ist mit den Enden mehrerer Winkelhebel 47 verbunden, deren Laufrollen 48 in Längsschlitze 49 eingreifen,; er läßt sich mit Hilfe eines Vorschubzylinders 50 hin- und herbewegen. Die Winkelhebel 47 sind bei 51 gelenkig am Badbehälter 4 gelagert und über ein Gestänge 52 gelenkig miteinander verbunden. An dem unteren Hebelarm eines Winkelhebels 47. greift außerdem ein Lenker 53 und die Kolbenstange eines Hubzylinders 54 an. Mit Hilfe des Vorschubzylinders 50 und gegebenenfalls auch des Hubzylinders 54 läßt sich der Hub- und Fahrrahmen 46 gleichzeitig anheben und hin- und herbewegen.

Darüber hinaus ist der Hubrahmen mit mehreren Hordenmanipulatoren 54 ausgestattet, die zum Einbringen der Horden in das Bad und zum Herausnehmen der Horden aus dem Bad dienen.

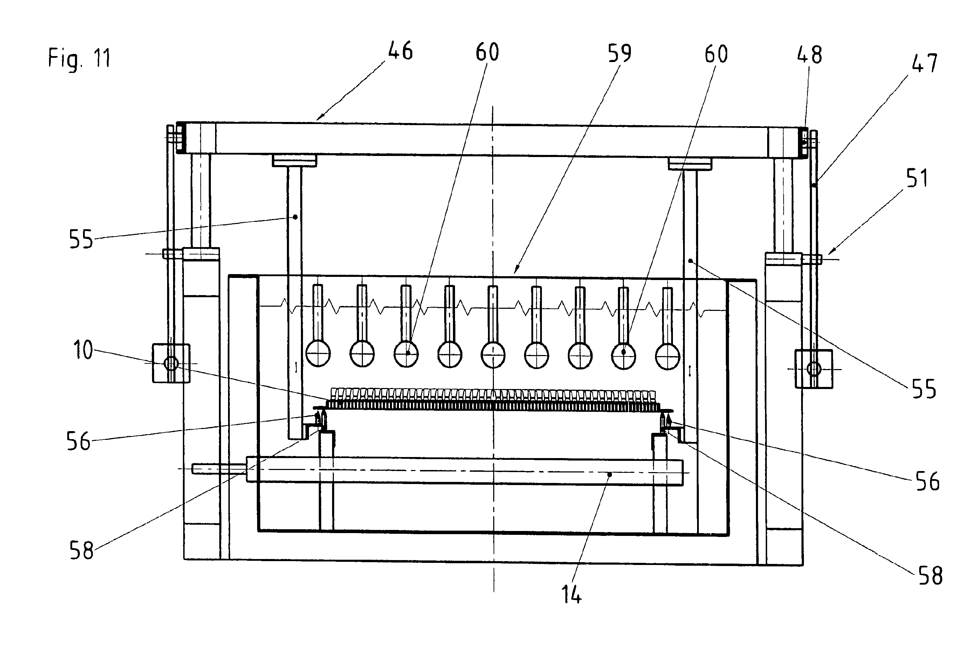

Der Hubrahmen 46 ist mit Tragarmen 55 versehen, an deren unteren Enden Tragstifte 56 angeordnet sind. Des weiteren befinden sich in dem Badbehälter 4 Tragschienen 57 mit Kontaktstiften 58, auf denen die Horden 10 ruhen, solange sie sich auf einem Stellplatz befinden, wie das in Fig. 11 dargestellt ist. Beim Transport der Horden 10 von einem Stellplatz zum nächsten Stellplatz übernehmen die Kontaktstifte 56 der Tragarme 55 die Horde, die somit stets über die stationären Kontaktstifte 58 oder die rahmenfesten Kontaktstifte 56 unter Strom stehen. Unterhalb der Horden 10 sind Anoden 14 und oberhalb Rohranoden 59 angeordnet, deren Rohre 60 mit nicht dargestellten Austrittsöffnungen für den Elektrolyten versehen sind.

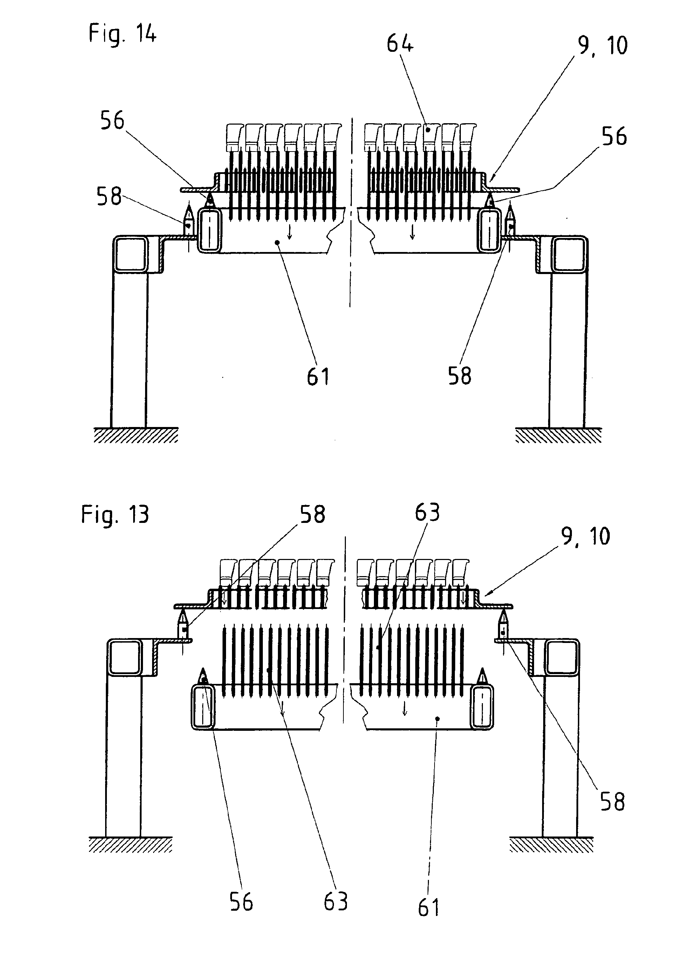

Um das auf den Horden befindliche Behandlungsgut umlagern zu können, ist unterhalb der Bewegungsbahn der Horden 10 ein Hubtisch 61 angeordnet, der mit Kontaktstiften 62 und Traglinealen 63 ausgestattet ist. Die Traglineale 83 greifen bei einer Aufwärtsbewegung des Hubtischs 62 zwischen die Querleisten der Horde 10 und heben auf diese Weise das Behandlungsgut 64 von den Querleisten ab, wie das in Fig. 14 dargestellt ist. Dabei übernehmen die Kontaktstifte 62 des Hubtischs 61 die Horde 10 von den stationären Kontaktstiften 58, so daß die Horde unterbrechungslos unter Strom steht. Mit Hilfe einer geringfügigen Relativbewegung zwischen dem Hubtisch 61 und der Horde 10 läßt sich das Behandlungsgut 64 auf der Horde 10 umsetzen und werden so andere Kontaktstellen geschaffen.

Die Hordenmanipulatoren 54 bestehen im wesentlichen aus einer Säule 65, die sich mit Hilfe eines Hubantriebs 66 auf- und abfahren läßt. An der Säule ist des weiteren ein Seilantrieb 67 angeordnet, von dem ein Seil 68 über eine Umlenkrolle 69 am oberen Ende der Säule 65 zu einer Niederhalteplatte 70 geführt ist. Am unteren Ende ist die Säule 65 mit einem um eine Achse 71 verschwenkbaren Kipptisch 72 verbunden, mit dessen Hilfe sich eine Horde 9,10 schräg stellen läßt, um sie abtropfen zu lassen oder das Behandlungsgut blasenfrei in das Bad einzutauchen. Der Kipptisch 72 wird mit Hilfe eines angetriebenen Schwenkarms 73 über einen Seilzug 24 betätigt.

Mit Hilfe des Hubantriebs 66 läßt sich die Säule 65 vertikal verfahren und auf diese Weise die Horde 9,10 entweder in den Badbehälter 1,2,3,4 absenken oder so nach oben fahren, daß sie in den Einflußbereich einer Entnahmevorrichtung 75 gelangt.

Das Behandlungsgut läßt sich mit Hilfe eines Hubtischs 76 auf die Horde 9,10 eines Hubtischs 77 umsetzen. Dies geschieht mit Hilfe von Traglinealen 78, die über einen Tragarm 79 mit einem Schlitten 80 auf einer angetriebenen Spindel 81 verbunden sind. Die Traglineale 78 fahren horizontal in die auf dem Hubtisch 77 befindliche Horde hinein und übernehmen beim Absenken des Hubtischs 76 das Behandlungsgut, das alsdann durch weiteres Verfahren der Traglineale 78 auf der Horde 9,10 des Hubtischs 77 eines parallel angeordneten Förderers abgelegt wird.

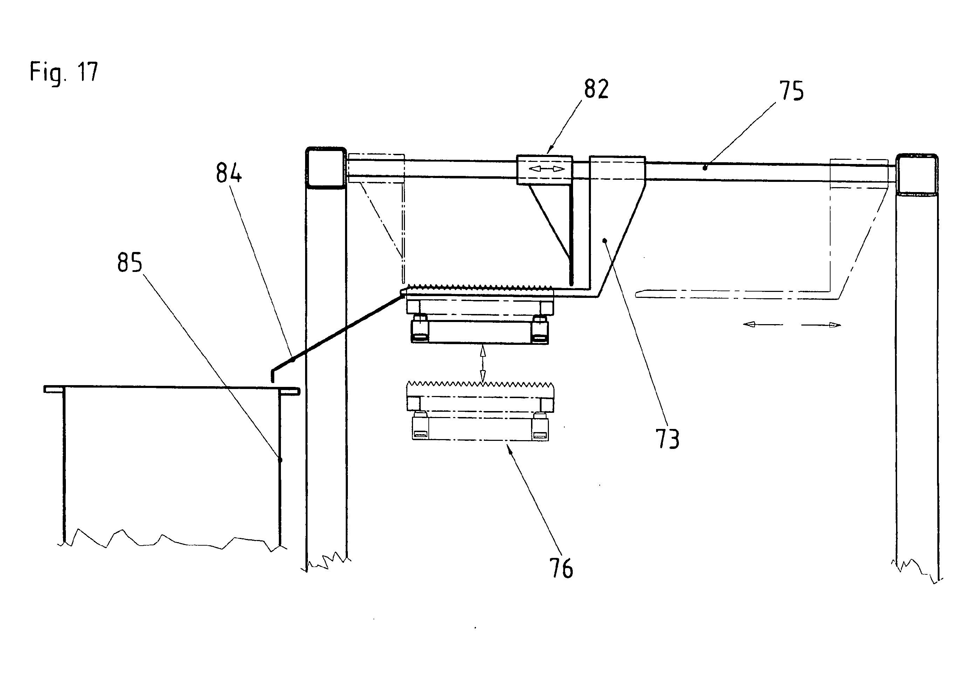

Das Entladen der Horden geschieht entsprechend der Darstellung in Fig. 17 ebenfalls mit Hilfe eines Hubtischs 76 und von Hublinealen 78, von denen ein an einem Schlitten 82 angeordneter Rechen 83 das Behandlungsgut herunterschiebt, das über eine Schurre 84 in einen Sammelbehälter 85 gelangt.

Das Reinigen der Horden 10 geschieht mit Hilfe schwenkbarer Spachtel 86 aus dünnem Blech, die an einem Drehkranz 87 angeordnet sind, an dem die Kolbenstange eines Drehzylinders 88 angreift. Der Drehkranz ist an einem Rahmen 89 verschiebbar gelagert und läßt sich mit Hilfe eines Schubzylinders 90 hin- und herbewegen.

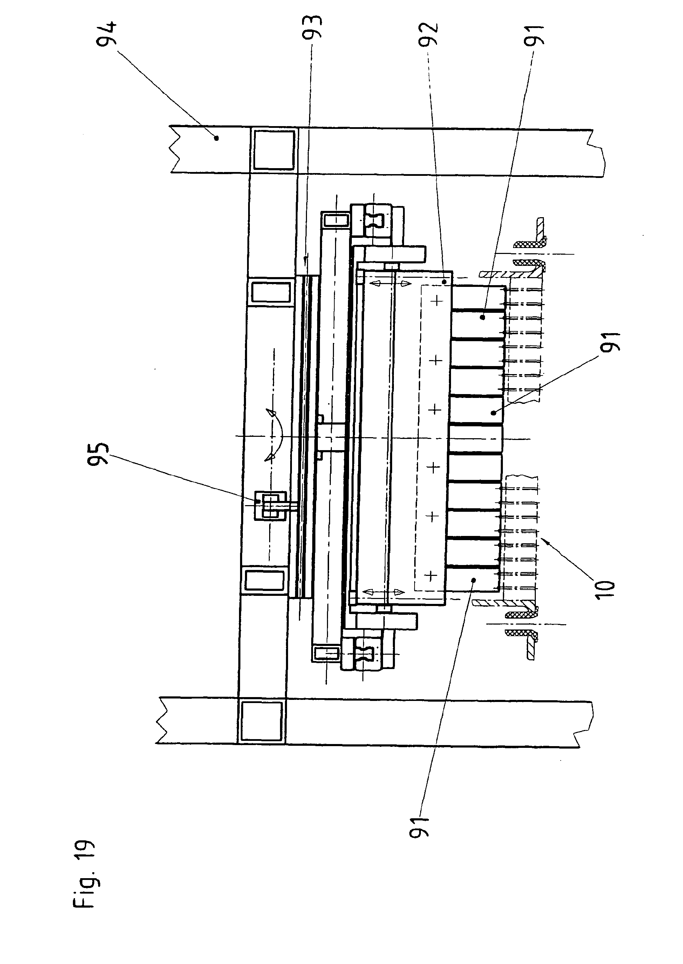

Wie in Fig. 19 dargestellt, können auch mehrere Spachtel 91 in einem gemeinsamen, hebund senkbaren Rahmen 92 angeordnet sein, der seinerseits über einen Drehkranz 93 in einem Gestell 94 gelagert und über einen Verstellzylinder 95 gedreht wird.

Alternativ kann das Gestell 94 auch mit Schienen 95 versehen sein, auf denen ein Schlitten 96 mit Schienen 97 verfahrbar ist, auf denen Reinigungsköpfe 98 verfahrbar angeordnet sind. Die Reinigungsköpfe 98 erlauben es, die Horden 10 mit Hilfe von Hochdruckwasser, einem mechanisch wirkenden Strahlmittel, flüssigem Stickstoff, Laserstrahlen oder Bürsten zu reinigen.

## Patentansprüche

1. Vorrichtung zum elektrolytischen Beschichten von Behandlungsgut mit
- einem Badbehälter (4) für den Elektrolyten
- einem über dem Badbehälter angeordneten, angetriebenen Schub- und Hubrahmen (15), an dem Greifer (25) angeordnet sind und
- Horden (9, 10) zur Aufnahme des Behandlungsgutes,
bei der die Geifer die Horden horizontal zwischen einer oberen Elektrode (13) und einer unteren Elektrode (14) durch den Badbehälter bewegen.

2. Vorrichtung nach Anspruch 1, **gekennzeichnet durch** einen Förderer (11) mit einem angetriebenen Hub- und Fahrrahmen (15; 46).

3. Vorrichtung nach Anspruch 2, **dadurch gekennzeichnet, daß** am Hub- und Fahrrahmen (15; 46) ein Schub- und ein Hubantrieb (16, 17) angreifen.

4. Vorrichtung nach Anspruch 2 oder 3, **dadurch gekennzeichnet, daß** der Hubantrieb aus einem an einem Schwenkhebel (18) angreifenden Hubzylinder (17) besteht, der mit einem Finger (21, 22) in einen Längsschlitz (23, 24) des Hub- und Fahrrahmens (15) greift.

5. Vorrichtung nach einem der Ansprüche 2 bis 4, **dadurch gekennzeichnet, daß** die Horden (9) mit Tragarmen (29) und der Badbehälter mit Tragschienen (31) versehen sind.

6. Vorrichtung nach einem der Ansprüche 2 bis 5, **gekennzeichnet durch** eine obere und eine untere Horizontalelektrode (13, 14) im Behälter (4).

7. Vorrichtung nach einem der Ansprüche 1 bis 6, **dadurch gekennzeichnet, daß** die Horden (9, 10) über Kontaktstücke (32) an stationären Schwenkarmen (33) mit einer Stromquelle verbunden sind.

8. Vorrichtung nach einem der Ansprüche 2 bis 7, **dadurch gekennzeichnet, daß** bewegliche Kontakte (26) am Hub- und Fahrrahmen (15) angeordnet sind.

9. Vorrichtung nach einem der Ansprüche 1 bis 8, **dadurch gekennzeichnet, daß** der Hordenwechsler (12) längs einer Brücke verfahrbare Traglineale (78) oberhalb eines Hubtischs (76, 77) und eines Hordenförderers (11) aufweist.

10. Vorrichtung nach einem der Ansprüche 2 bis 8, **dadurch gekennzeichnet, daß** der Förderer (11) mit jeweils einem Arm an dem Hub- und Fahrrahmen (46) angreifende zweiarmige Winkelhebel (47) aufweist, deren andere Arme über ein Gestänge (52) miteinander verbunden sind.

11. Vorrichtung nach Anspruch 10, **dadurch gekennzeichnet, daß** der Hub- und Fahrrahmen (46) sowie einer der Winkelhebel (47) jeweils mit einem eigenen Antrieb (50, 54) verbunden sind.

12. Vorrichtung nach Anspruch 11, **dadurch gekennzeichnet, daß** der Hub- und Fahrrahmen (46) mit Tragarmen (55) für die Horden (10) versehen ist.

13. Vorrichtung nach Anspruch 12, **dadurch gekennzeichnet, daß** die Tragarme (55) und im Badbehälter (1) angeordnete Tragschienen (57) mit Kontaktstiften (56, 58, 62) zum Aufnehmen der Horden (10) versehen sind.

14. Vorrichtung nach einem der Ansprüche 1 bis 13, **dadurch gekennzeichnet, daß** oberhalb der Horden (9, 10) im Badbehälter (1) Rohranoden (60) mit Austrittsöffnungen für einen Elektrolyten angeordnet sind.

15. Vorrichtung nach einem der Ansprüche 1 bis 14, **dadurch gekennzeichnet, daß** im Badbehälter (1) ein Hubtisch (61) mit Traglinealen (63) angeordnet ist.

16. Vorrichtung nach einem der Ansprüche 1 bis 15, **gekennzeichnet durch** mindestens einen Hordenmanipulator (65 bis 74).

17. Vorrichtung nach Anspruch 16, **dadurch gekennzeichnet, daß** der Hordenmanipulator (65 bis 74) mit dem Hub- und Fahrrahmen (46) verbunden ist.

18. Vorrichtung nach Anspruch 16 oder 17, **dadurch gekennzeichnet, daß** der Hubmanipulator (65 bis 74) mit einem verfahrbaren Kipptisch (72) und einem Niederhalter (70) versehen ist.

19. Vorrichtung nach einem der Ansprüche 1 bis 18, **gekennzeichnet durch** eine Entladestation mit zwischen die Tragelemente der Horden einfahrbaren Traglinealen (78) und über die Traglineale verfahrbaren Rechen (43).

20. Vorrichtung nach einem der Ansprüche 1 bis 19, **gekennzeichnet durch** eine Reinigungsstation mit angetriebenen Reinigungsspachteln (86, 91) oder verfahrbaren Reinigungsköpfen (98).

21. Horde für eine Vorrichtung nach einem der Ansprüche 1 bis 20, **gekennzeichnet durch** einen Rahmen (36) mit Querleisten (32), mit einer elektrisch isolierenden Beschichtung (39) und mit einem elektrisch leitenden Kopfdraht (38) mit einem freiliegenden Kontaktstreifen (40) an den Leisten.

22. Horde nach Anspruch 21, **gekennzeichnet durch** Lamellen mit einer sägezahnartigen Tragkante.
